# NEUE EUROPÄISCHE PATENTSCHRIFT

(11) **EP 0 764 079 B2**
(45) Veröffentlichungstag und Bekanntmachung des Hinweises auf die Entscheidung über den Einspruch: **21.03.2001**
(45) Hinweis auf die Patenterteilung: 22.07.1998
(21) Anmeldenummer: 96910024.7
(22) Anmeldetag: 04.04.1996
(51) Int. Cl.: B29C 67/00

(54) **VORRICHTUNG ZUM HERSTELLEN EINES DREIDIMENSIONALEN OBJEKTES MITTELS LASERSINTERN**
DEVICE FOR PRODUCING A THREE-DIMENSIONAL ARTICLE BY LASER SINTERING
DISPOSITIF DE PRODUCTION D'UN OBJET A TROIS DIMENSIONS PAR FRITTAGE AU LASER

(30) Priorität: 09.05.1995 DE 19516972
(43) Veröffentlichungstag der Anmeldung: 26.03.1997
(73) Patentinhaber: EOS GmbH ELECTRO OPTICAL SYSTEMS, 82152 Planegg (DE)
(72) Erfinder: WILKENING, Christian, D-86911 Diessen (DE); SIEVERS, Tim, D-81929 München (DE)
(74) Vertreter: Prüfer, Lutz H., Dipl.-Phys.
(86) Internationale Anmeldenummer: EP9601485
(87) Internationale Veröffentlichungsnummer: WO9635573

(56) Entgegenhaltungen:
- WO-A-88/02677
- WO-A-92/08566
- DE-A- 4 325 573
- DE-C- 4 300 478
- US-A- 2 499 961
- US-A- 4 943 928
- Dubbel, Taschenbuch für den Maschinenbau, 18. Auflage, S. x7-x8, 1995, Springer Verlag

## Beschreibung

Die Erfindung betrifft eine Vorrichtung zum Herstellen eines dreidimensionalen Objektes mittels Lasersintern nach dem Oberbegriff des Patentanspruches 1.

Eine derartige Vorrichtung ist aus der W092/08566 bekannt. Die Beheizung einer aufgetragenen Pulverschicht erfolgt bei dieser Vorrichtung mittels eines horizontal oberhalb der Pulverschicht angeordneten kreisförmigen Ringstrahlers. Der Laserstrahl für die Sinterung wird durch die kreisförmige offene Innenfläche des Ringstrahlers auf die Pulverschicht gelenkt. Diese Vorrichtung ist besonders vorteilhaft für kreisförmige Arbeitsflächen.

Für den Fall, daß die Arbeitsfläche, d.h. das Baufeld in dem das zu bildende Objekt schichtweise aufgebaut wird, keinen kreisförmigen, sondern einen rechteckigen bzw. quadratischen Querschnitt aufweist, ist ein Ringstrahler nur bedingt einsetzbar. Die Durchmesser des Ringstrahlers müssen mindestens so groß sein, wie die Diagonale des Rechteckes der Arbeitsfläche. Gerade bei rechteckigen Baufeldern mit einem Längen- zu Breitenverhältnis zwischen 1.5 und 2 ist dies ein besonders großer Nachteil, da Ringstrahler mit einem großen Durchmesser erforderlich sind. Der notwendige Abstand des Strahlers von der Oberfläche und gleichzeitig die Forderung des praktischen Einbaus des Strahlers in eine Lasersinteranlage sind zwei sich widerstrebende Forderungen. Kompromißlösungen führen zu einer nicht gleichförmigen Temperaturverteilung in der Pulverschicht. Eine gleichmäßige Temperatur des Pulvermateriales, die typischerweise geringfügig unterhalb dessen Schmelztemperatur liegen sollte, ist jedoch unerläßlich im Hinblick auf eine gute Bauteilqualität und eine hohe Prozeßsicherheit.

Aus der US 4,943,928 ist eine Vorrichtung zum Herstellen eines dreidimensionalen Objektes durch arnfeinanderfolgendes Verfestigen von Schichten eines verfestigbaren Materials an den dem jeweiligen Objektquerschnitt entsprechenden Stellen bekannt. Die Vorrichtung weist einen Träger zum Tragen des zu bildenden Objektes auf und eine Verfestigungseinrichtung zum Verfestigen der Schichten des Materials an den dem jeweiligen Objektquerschnitt entsprechenden Stellen, wobei die Verfestigungseinrichtung einen in Arbeitsstellung oberhalb des Trägers angeordneten länglichen und über die Schicht beweglichen Wagen aufweist, der eine Mehrzahl von selektiv anschaltbaren Wärmequellen zum Erwärmen und Verfestigen des Materials aufweist.

Die US-A-2,499,961 beschreibt eine ebene Wärmequelle, bestehend aus einer Mehrzal von parallel zueinander angeordneten Heizelementen, wobei jedes Heizelement als geradliniger Heizstrabler ausgebildet ist, bei dem die Dichte der abgestrahlten Leistung in den Endbereichen größen ist als in dem Mittenbereich.

Aufgabe der Erfindung ist es, eine Vorrichtung zum Herstellen eines dreidimensionalen Objektes mittels Lasersintern bereitzustellen, mit der eine verbesserte Qualität der Bauteile und eine verbesserte Prozeßsicherheit insbesondere bei Verwendung einer nicht kreisförmigen Arbeitsfläche ermöglicht wird und bei der die Heizeinrichtung platzsparend ausgebildet werden kann.

Die Aufgabe wird gelöst durch eine Vorrichtung nach dem Patentanspruch 1.

Weiterbildungen sind in den Unteransprüchen angegeben.

Weitere Merkmale und Zweckrnäßigkeiten der Erfindung ergeben sich aus der Beschreibung von Ausführungsbeispielen anhand der Figuren.

Von den Figuren zeigen:
- Fig. 1: eine schematische Schnittansicht der erfindungsgemäßen Vorrichtung;
- Fig. 2: eine perspektivische Ansicht der Heizstrahleranordnung über dem Baufeld;
- Fig. 3: eine Draufsicht auf einen Heizstrahler; und
- Fig. 4: ein Beispiel für ein Übertragungsverhalten der zu erwärmenden Pulverschicht.

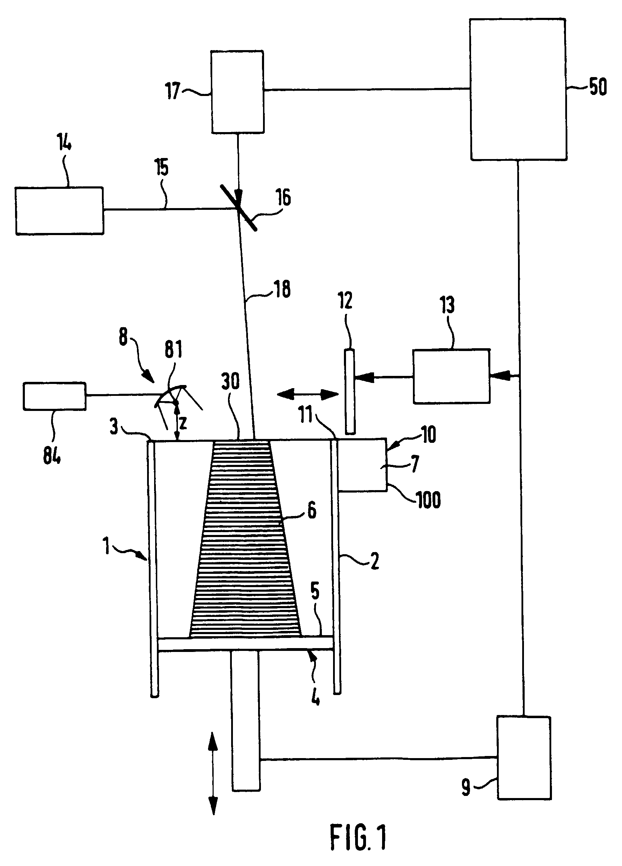

Wie aus Fig. 1 ersichtlich ist, weist die Vorrichtung einen Behälter 1 auf, der nur durch eine in Umfangsrichtung geschlossene Seitenwand 2 mit rechteckigem oder quadratischem Umriß gebildet wird. Durch den oberen Rand 3 der Seitenwand 2 bzw. des Behälters 1 ist eine Arbeitsebene 30 definiert. In dem Behälter 1 ist ein Träger 4 mit einer im wesentlichen ebenen und parallel zu dem oberen Rand 3 ausgerichteten Oberseite 5 zum Tragen eines zu bildenden Objektes 6 angeordnet. Auf der Oberseite 5 des Trägers 4 befindet sich das Objekt 6, welches aus einer Mehrzahl von sich parallel zu der Oberseite 5 erstreckenden Schichten eines mittels elektromagnetischer Strahlung verfestigbaren pulverförmigen Aufbaumateriales 7 in der später beschriebenen Weise aufgebaut wird. Der Träger 4 weist in einer Ebene senkrecht zu der Seitenwand dem Umriß der Seitenwand 2 angepaßten quadratischen bzw. rechteckigen Querschnitt auf mit einem Außenmaß, das geringfügig kleiner als das Innenmaß der Seitenwand 2 ist. Zwischen dem Träger 4 und der Seitenwand 2 ist eine an dem Rand des Trägers umlaufende Dichtung zum Abdichten gegen hindurchtretendes Aufbaumaterial 7 vorgesehen. Ferner ist der Träger 4 über eine Höheneinstellvorrichtung 9 in vertikaler Richtung, d.h. parallel zu der Seitenwand 2 des Behälters 1 verschiebbar. Damit kann die Position des Trägers 4 relativ zu der Arbeitsebene 30 eingestellt werden.

Seitlich an dem Behälter 1 ist ein an seiner Oberseite offener Vorratsbehälter 10 mit einer Seitenwand 100 für das Aufbaumaterial 7 vorgesehen. An seinem an die Seitenwand 2 des Behälters 1 angrenzenden Teil der Seitenwand 100 schließt die Oberkante 11 des Vorratsbehälters 10 bündig mit dem oberen Rand 3 des Behälters 1 ab. Der Vorratsbehälters 10 ist mit dem pulverförmigen Aufbaumaterial 7 stets bis etwas über die an den Behälter 1 angrenzende Oberkante 11 gefüllt. Um dies zu gewährleisten, ist ein in Fig. 1 nicht dargestellter Stempel bzw. ein verschiebbarer Boden, ähnlich dem Träger 4 vorgesehen, der in dem Vorratsbehälter 10 in vertikaler Richtung verschiebbar ist.

Als pulverförmiges Aufbaumaterial 7 wird insbesondere Metallpulver oder Keramikpulver verwendet.

Auch kunststoffummanteltes Metall bzw. Keramikpulver oder Formsand bestehend aus Quarzsand mit einem Überzug aus Kunstharz kann verwendet werden.

Oberhalb des Behälters 1 bzw. der Arbeitsebene 30 ist ein Beschichter 12, dessen Unterkante in der Arbeitsebene 30 liegt, zum Aufbringen des Aufbaumaterials 7 auf die Oberseite 5 des Trägers bzw. eine zuvor gebildete Schicht des zu bildenden Objektes 6 angeordnet. Der Beschichter 12 ist von einer ersten Position über dem Vorratsbehälter 10 quer über den Behälter 1 bis zu einer dem Vorratsbehälter 10 gegenüberliegenden zweiten Position parallel zu dem oberen Rand 3 des Behälters 1 und wieder zurück mittels einer Verschiebevorrichtung 13 verschiebbar.

Oberhalb des Behälters 1 bzw. der Arbeitsebene 30 ist eine Vorrichtung 14 zum Verfestigen der an die Arbeitsebene 30 angrenzenden jeweils obersten Schicht des Objektes 6 vorgesehen. Die Vorrichtung 14 weist eine Strahlungsquelle in Form eines Lasers auf, der einen gebündelten Lichtstrahl 15 erzeugt. Etwa mittig oberhalb des Behälters 1 ist ein Umlenkspiegel 16 angeordnet, der kardanisch aufgehängt ist und von einer schematisch angedeuteten Schwenkvorrichtung 17 so geschwenkt werden kann, daß der auf den Spiegel 16 gerichtete Lichtstrahl 15 als reflektierter Lichtstrahl 18 im wesentlichen an jeder Stelle der Arbeitsebene 30 positioniert werden kann.

Ferner ist oberhalb des Behälters 1 bzw. der Arbeitsebene 30 eine in Fig. 1 nur schematisch dargestellte Heizeinrichtung 8, die eine Mebrzahl von geradlinigen röhrenförmigen Heizstrahlen 81 umfaßt, in einem vorbestimmten Abstand z von der Arbeitsebene 30 angeordnet. Die Heizeinrichtung 8 dient zum Aufheizen der mit dem Beschichter 12 aufgetragenen Pulverschicht auf eines für die Sinterung mittels des Laserstrahls erforderliche Vortemperatur.

Die Position der Heizeinrichtung 8 wird mit einer Kalibrierung festgelegt. Die Höhe z des Heizstrahlers 81 über der Arbeitsebene 30 und der Winkel des Heizstrahlers 81 zur Arbeitsebene 30 wird dabei manuell eingestellt. Der Heizstrahler 81 ist mit einer Regeleinrichtung 84 zum Regeln der Heizleistung des Heizstrahlers 81 verbunden.

Die Höheneinstellvorrichtung 9, die Verschiebevorrichtung 13 und die Schwenkvorrichtung 17 sind mit einer gemeinsamen Steuervorrichtung 50 zur zentralen und koordinierten Steuerung dieser Vorrichtungen verbunden. Die Steuervorrichtung 50 ist mit einem Computer verbunden.

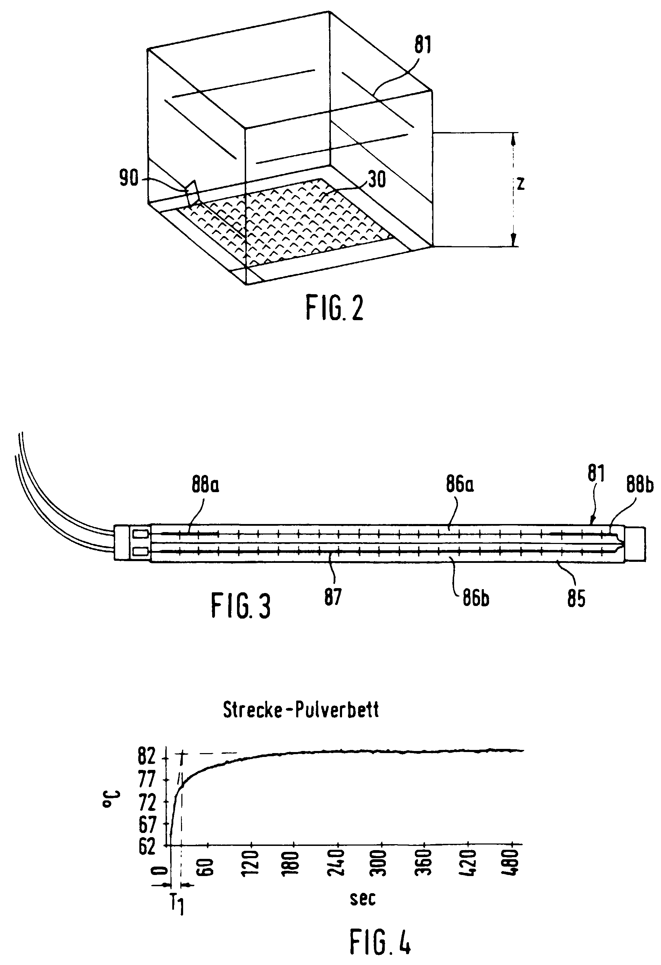

Die Beheizung einer aufgebrachten Pulverschicht erfolgt über mindestens zwei, besser jedoch 4 geradlinige Heizstrahler 81, die, wie in Fig. 2 gezeigt ist, in Anpassung an die Form des Behälters bzw. des dadurch definierten Baufeldes, vorzugsweise in Form eines Rechtecks oder eines Quadrates parallel zur Arbeitsebene 30 angeordnet sind. Die Länge eines einzelnen Heizstrahlers 81 entspricht jeweils in etwa der von ihm zu überdeckenden Breite des Baufeldes. Der Abstand z der Strahler 81 zu der Pulverschicht beträgt etwa 220 Millimeter, dieser Abstand kann jedoch über die Höheneinstellvorrichtung 83 in Anpassung an die Randbedingungen variiert werden, so daß in Abhängigkeit von dem eingestellten Heizstrom eine vorbestimmte Temperatur auf der Oberseite der aufgetragenen Pulverschicht erhalten wird.

Jeder einzelne der Heizstrahler 81 ist, wie in Fig. 3 gezeigt ist, ausgebildet. Der Strahler weist einen Quarzglaskörper 85 auf, der zwei Kanäle 86a und 86b enthält. In einem der Kanäle befindet sich eine durchgehende Heizwendel 87 aus Wolfram. Bei Verwendung einer sich durch den gesamten Strahler 81 erstreckenden Heizwendel ergibt sich, dar das Maximum dem abgestrahlten Leistung in der Mitte des Strahlers liegt. Deshalb ist der erfindungsgemäße Heizstrahler 81 so gestaltet, daß die in dem anderen Kanal verlaufende Heizwendel eine geteilte Wendel 88a, 88b ist. Durch die geteilte Wendel 88a, 88b wird der Leistungsabfall der durchgehenden Wendel 87 zu den Enden hin ausgeglichen. Die abgestrahlte Leistung des Heizstrahlers ist in den Endbereichen größer als im Mittenbereich. Dadurch wird bewirkt, daß die Strahlungsintensität über die Länge des Strahlers 81 konstant ist. Ferner kann durch die geteilte Wendel 88a, 88b das Temperaturfeld der Geometrie des Baufeldes verstärkt angeglichen werden.

Als Heizstrahler werden bevorzugt Infrarotstrahler verwendet.

Die Strahler 81 sind so über dem Baufeld positioniert, daß die Symmetrielinien des Baufeldes mit den Symmetrielinien der Strahleranordnung übereinstimmen, d.h. bei einem quadratischen Baufeld wird eine quadratische Strahleranordnung gewählt und bei einem rechteckigen Baufeld wird eine rechteckige Strahleranordnung gewählt.

Die Heizung 8 umfaßt ferner einen Sensor 90 in Form eines berührungslos messenden Temperaturfühlers in Form eines Pyrometers, der an einer vorgegebenen Stelle über dem Pulverbett bzw. der Arbeitsebene 30 angebracht ist.

Zum Regeln der Heizleistung weist die Regelung 84 einen Industrieregler in Form eines PID-Reglers bzw. eines Pl-Reglers auf.

Abwandlungen der Beschriebenen Vorrichtung sind möglich. Es können auch mehr oder weniger als vier Heizstrahler verwendet werden. Die Anzahl und die Anordnung der Heizstrahler richtet sich nach der Geometrie des Baufeldes 1 bzw. kann auch in Abhängigkeit von der Größe des herzustellenden Objektes gewählt werden. Auch kann ein einzelner Heizstrahler eine Mehrzahl von Kanälen mit Heizwendeln bzw. geteilten Heizwendeln aufweisen, Bedingung ist lediglich, daß durch den gewählten Aufbau des Heizstrahlers eine über die gesamte Strahlerlänge konstante Strahlungsintensität abgegeben wird.

Bei der Herstellung eines dreidimensionalen Objektes werden zunächst in dem mit der Steuerung 50 gekoppelten Computer mit einem Konstruktionsprogramm Daten über die Form des Objektes 6 erstellt. Diese Daten werden für die Herstellung des Objektes 6 so aufbereitet, daß das Objekt in eine Vielzahl von horizontalen, im Vergleich zu Objektdimension dünnen Schichten mit einer Dicke von Beispielsweise 0,1-1mm zerlegt wird und die Formdaten für diese Schicht bereitgestellt werden.

Dann werden für jede Schicht die folgenden Schritte durchgeführt.

Der Träger 4 wird mittels der Höheneinstellvorrichtung 9 so in dem Behälter 1 positioniert, daß bei der ersten Schicht seine Oberseite 5 bzw. beim Vorhandensein bereits verfestigter Schichten die Oberseite der zuletzt verfestigten Schicht um eine gewünschte Schichtdicke h unterhalb des Randes 3 des Behälters 1 liegt. Dann wird eine Schicht des Materials 7 mit dem Beschichter 12 von dem Vorratsbehälter 10 auf die Oberseite des Trägers 4 bzw. auf eine zuvor gebildete Schicht aufgebracht. Dieses neu aufgebrachte Pulver ist kaltes Pulver aus dem Vorratsbehälter 10. Die neue Pulverschicht muß sehr schnell erwärmt werden, damit die darunterliegende Schicht nicht so stark abkühlt. Da die von dem Heizstrahler 81 abgegebene Strahlungswärme die neue Pulverschicht nur an der Oberfläche erwärmt, dauert es eine bestimmte Zeit, bis die gesamte Pulverschicht durch Wärmetransport innerhalb der Schicht auf die gewünschte Temperatur gebracht ist. Zu diesem Zweck ist eine Regelung der Heizleistung der Heizstrahler 81 vorgesehen. Wie in Fig. 4 gezeigt ist, wird zur Bestimmung der Regelparameter die Strecke des Pulverbettes untersucht. Dazu wird das Übertragungsverhalten aufgezeichnet (Fig. 4). Bei der Strecke handelt es sich um ein sogenanntes PT₁-Glied, wobei ein vorgegebener Temperatursprung P mit einer Zeitverzögerung T₁ erreicht wird. Die Regelung der Heizung erfolgt über einen PID-Regler (Regler mit Proportional-, Integral- und Differentialanteil). Dabei werden mit Hilfe des Übertragungsverhaltens die Regelparameter in bekannter Weise festgelegt.

Es ist auch möglich, einen Pl-Regler (Regler mit Proportional- und Integralanteil) zu verwenden.

Bei der Erwärmung einer Pulverschicht tritt die höchste Beanspruchung der Regelung bei einer kurzen Zykluszeit auf. Dies ist der Fall, wenn nur der Rahmen um das Baufeld und ein kleines Werkstück im Baufeld gebaut werden. Einen weiteren Einfluß hat die Belichtung einer Pulverschicht im Meßfleck des Sensors. Sie führt zu einer großen Überschreitung der Soll-Temperatur. All dies wird durch die Regelung der Heizleistung abgefangen.

Wenn die gesamte neu aufgetragene Pulverschicht die zum Sintern erforderliche Temperatur erreicht hat, wird die Schwenkvorrichtung 17 entsprechend den Formdaten für die Schicht derart gesteuert, daß der abgelenkte Lichtstrahl 18 an den dem Querschnitt des Objektes 6 entsprechenden Stellen der Schicht auftrifft und dort das Aufbaumaterial 7 verfestigt bzw. sintert.

Anschließend wird der Träger 4 um eine Schichtdicke der nachfolgenden Schicht abgesenkt. Die beschriebenen Schritte werden so oft wiederholt, bis das Objekt fertiggestellt ist. Anschließend wird der Träger 4 soweit aus dem Behälter herausgefahren, bis das Objekt entnommen werden kann.

Der besondere Vorteil der beschriebenen Vorrichtung besteht darin, daß durch den besonderen Aufbau der Heizstrahler und die Anordnung der Heizstrahler relativ zu dem Baufeld auch bei nicht kreisförmigem Baufeld eine gleichmäßige Erwärmung der Pulverschicht gewährleistet werden kann. Ferner wird durch die beschriebene Regelung gewährleistet, daß sich die neu aufgetragene Pulverschicht zum Zeitpunkt der Verfestigung mit dem Laserstrahl stets auf der erforderlichen Temperatur gehalten ist. Da der Abstand und auch der Winkel der Heizstrahler von bzw. zu der Arbeitsebene 30 variierbar ist, ist es möglich, abhängig von der eingestellten Heizleistung die Temperatur auf der Baufeldoberfläche zu wählen. Außerdem sind die Heizstrahler praktisch in eine Lasersinteranlage mit quadratischem bzw. rechteckigem Baufeld einzubauen.

## Patentansprüche

1. Vorrichtung zum Herstellen eines dreidimensionalen Objektes durch aufeinanderfolgendes Verfestigen von Schichten eines verfestigbaren Materials (7) an den dem jeweiligen Objektquerschnitt entsprechenden Stellen mittels Strahlung (18) mit:
einem Träger (4) zum Tragen des zu bildenden Objektes (6);
einer Auftragevorrichtung (12) zum Auftragen von Schichten des verfestigbaren Materials (7) auf den Träger (4) oder eine zuvor verfestigte Schicht;
einer Verfestigungseinrichtung (14) zum Verfestigen der Schichten des Materials (7) an den dem jeweiligen Objektquerschnitt entsprechenden Stellen, und
einer in Arbeitsstellung oberhalb des Trägers (4) vorgesehenen Heizeinrichtung (8) zum Erwärmen des verfestigbaren Materials (7)
dadurch gekennzeichnet, daß
die Heizeinrichtung (8) eine Mehrzahl von geradlinigen Heizstrahlern (81) umfaßt, wobei die Dichte der abgestrahlten Leistung eines jeden Heizstrahlers (81) in den Endbereichen des Heizstrahlers größer ist als in dem Mittenbereich, und

2. Vorrichtung nach Anspruch 1, dadurch gekennzeichnet, daß der Heizstrahler (81) zwei nur an seinen Endbereichen vorgesehene Heizwiderstände (88a, 88b) umfaßt.

3. Vorrichtung nach Anspruch 2, dadurch gekennzeichnet, daß der Heizstrahler (81) einen sich über seine gesamte Länge erstreckenden Heizwiderstand (87) umfaßt.

4. Vorrichtung nach Anspruch 3, dadurch gekennzeichnet, daß der Heizstrahler (81) zwei jeweils eine Heizwendel (87, 88a, 88b) umfassende Kanäle (86a, 86b) aufweist, wobei eine der Heizwendeln (88a, 88b) eine geteilte Wendel ist und die andere eine durchgehende Wendel (87) ist.

5. Vorrichtung nach einem der Ansprüche 1 bis 4,
dadurch gekennzeichnet, daß
der Träger (4) höhenverstellbar ist und daß die auf den Träger (4) bzw. eine zuvor verfestigte Schicht aufgetragene Schicht des Materials (7) ein Baufeld definiert.

6. Vorrichtung nach einem der Ansprüche 1 bis 5, dadurch gekennzeichnet, daß
das Baufeld quadratisch ist und vier gleichlange Heizstrahler (81) in einem vorbestimmten Abstand parallel zu dem Baufeld vorgesehen sind, die in Form eines Quadrates angeordnet sind.

7. Vorrichtung nach einem der Ansprüche 1 bis 5, gekennzeichnet, daß
das Baufeld rechteckig ist und daß vier Heizstrahler (81) vorgesehen sind, die jeweils in einem bestimmten Abstand zum Baufeld in Form eines Rechteckes angeordnet sind.

8. Vorrichtung nach einem der Ansprüche 1 bis 7,
dadurch gekennzeichnet, daß
der Abstand der Heizeinrichtung (8) von der Oberfläche des Baufeldes einstellbar ist.

9. Vorrichtung nach einem der Ansprüche 1 bis 8,
dadurch gekennzeichnet, daß
der Heizstrahler (81) als Infrarotstrahler ausgebildet ist.

10. Vorrichtung nach einem der Ansprüche 1 bis 9,
gekennzeichnet durch
eine Regelung (84) für die Heizeinrichtung (8) und einen Sensor (90) zum Messen der Temperatur einer Schicht des aufgetragenen Materials

11. Vorrichtung nach Anspruch 10, dadurch gekennzeichnet,
daS der Sensor (90) als ein berührungslos messender Temperaturfühler ausgebildet ist.

12. Vorrichtung nach Anspruch 10 oder 11, dadurch gekennzeichnet, daß
die Regelung (84) einen PID-Regler aufweist.

13. Vorrichtung nach Anspruch 10 oder 11, dadurch gekennzeichnet, daß
die Regelung (84) einen Pl-Regler aufweist.

14. Vorrichtung nach einem der Ansprüche 1 bis 13,
dadurch gekennzeichnet,
daß der Winkel des Heizstrahlers (81) relativ zu dem Baufeld einstellbar ist.

## Claims

1. Device for producing a three-dimensional object by means of successive hardening of layers of a hardenable material (7), at the points corresponding to the respective object cross-section, by means of radiation (18), having:
a carrier (4) for carrying the object (6) to be formed; an applicator device (12) for applying layers of the hardenable material (7) to the carrier (4) or a previously hardened layer;
a hardening device (14) for hardening the layers of the material (7) at the points corresponding to the respective object cross-section, and
a heating device (8), provided in a working position above the carrier (4), for heating the hardenable material (7), characterized in that
the heating device (8) comprises a plurality of rectilinear radiant heaters (8i), the density of the radiated power of each of the radiant heaters (81) being greater ..n the end regions of the radiant heater than in the central region, and the radiant heaters being arranged such that they form a closed polygon.

2. Device according to Claim 1, characterized in that the radiant heater (81) comprises two heating resistors (88a, 88b) provided only at its end regions.

3. Device according to Claim 2, characterized in that the radiant heater (81) comprises a heating resistor (37) extending over its entire length.

4. Device according to Claim 3, characterized in that the radiant heater (81) has two channels (86a, 86b) each comprising a heating filament (87, 88a, 88b), one of the heating filaments (88a, 88b) being a divided filament and the other being a continuous filament (87).

5. Device according to one of Claims 1 to 4, characterized in that the carrier (4) is height-adjustable, and in that the layer applied to the carrier (4) or to a previously hardened layer of the material (7) defines a working field.

6. Device according to one of Claims 1 to 5, characterized in that the working field is square and four equally long radiant heaters (81) are provided at a predetermined distance parallel to the working field, and are arranged in the form of a square.

7. Device according to one of Claims 1 to 5, characterized in that the working field is rectangular, and in that four radiant heaters (81) are provided, which are each arranged at a specific distance from the working field, Ln the form of a rectangle.

8. Device according to one of Claims 1 to 7, characterized Ln that the distance of the heating device (8) from the surface of the working field is adjustable.

9. Device according to one of Claims 1 to 8, characterized in that the radiant heater (81) is designed as an infrared radiator.

10. Device according to one of Claims 1 to 9, characterized by a control system (84) for the heating device (8) anc. a sensor (90) for measuring the temperature of a layer of the applied material,

11. Device according to Claim 10, characterized in that the sensor (90) is designed as a temperature sensor measuring without contact.

12. Device according to Claim 10 or 11, characterized in that the control system (84) has a PID controller.

13. Device according to Claim 10 or 11, characterized in that the control system (84) has a PI controller.

14. Device according to one of Claims 1 to 13, characterized in that the angle of the radiant heater (81) relative to the working field is adjustable.

## Revendications

1. Dispositif pour la fabrication d'un objet tridimensionnel par durcissement successif des couches d'un matériau (7) durcissable sur les zones correspondant à chaque section de l'objet à l'aide d'un rayonnement (18), comprenant : un support (4) qui porte l'objet (6) à réaliser ; un dispositif d'enduction (12) pour déposer des couches du matériau (7) durcissable sur le support (4) ou sur une couche précédemment durcie ; un dispositif de durcissement (14) pour durcir les couches du matériau (7) sur les zones correspondant à chaque section de l'objet, et un dispositif de chauffage (8) qui, en position de travail, est prévu au-dessus du support (4) et est destiné à chauffer le matériau (7) durcissable, caractérisé en ce que le dispositif de chauffage (8) comprend une pluralité de brûleurs radiants (81) rectilignes, la densité de la puissance dégagée par chacun des brûleurs radiants (81) dans les zones d'extrémité du brûleur radiant étant supérieure à celle dans la zone centrale et les brûleurs radiants étant disposés de manière à former un polygone fermé.

2. Dispositif selon la revendication 1, caractérisé en ce que le brûleur radiant (81) comprend deux résistances chauffantes (88a, 88b) prévues dans les zones d'extrémité.

3. Dispositif selon la revendication 2, caractérisé en ce que le brûleur radiant (81) contient un filament incandescent (87) qui s'étend sur toute la longueur dudit brûleur radiant.

4. Dispositif selon la revendication 3, caractérisé en ce que le brûleur radiant (81) comporte deux canaux (86a, 86b) contenant chacun un filament incandescent (87, 88a, 88b), l'un des filaments incandescents (88a, 88b) étant un filament scindé et l'autre un filament continu (87).

5. Dispositif selon l'une quelconque des revendications 1 à 4, caractérisé en ce que le support (4) peut être déplacé en hauteur et en ce que la couche de matériau (7) déposée sur le support (4) ou sur une couche précédemment durcie définit un champ de montage.

6. Dispositif selon l'une des revendications 1 à 5, caractérisé en ce que le champ de montage est carré et en ce qu'il est prévu de monter quatre brûleurs radiants (81) de même longueur à une distance donnée parallèle au champ de montage, lesquels brûleurs radiants sont disposés en formant un carré.

7. Dispositif selon l'une des revendications 1 à 5, caractérisé en ce que le champ de montage est rectangulaire et en ce qu'il est prévu de monter quatre brûleurs radiants (81) à une distance donnée du champ de montage, en formant un rectangle.

8. Dispositif selon l'une quelconque des revendications 1 à 7, caractérisé en ce qu'il est possible de régler la distance entre le dispositif de chauffage (8) et la surface du champ de montage.

9. Dispositif selon l'une quelconque des revendications 1 à 8, caractérisé en ce que le brûleur radiant (81) est un brûleur à infrarouge.

10. Dispositif selon l'une quelconque des revendications 1 à 9, caractérisé par un dispositif de réglage (84) pour le dispositif de chauffage (8) et un capteur (90) destiné à mesurer la température d'une couche du matériau déposé.

11. Dispositif selon la revendication 10, caractérisé en ce que le capteur (90) est conçu sous forme de capteur de température pour une mesure sans contact.

12. Dispositif selon la revendication 10 ou 11, caractérisé en ce que le dispositif de réglage (84) est un régulateur à triple action P.I.D.

13. Dispositif selon la revendication 10 ou 11, caractérisé en ce que le dispositif de réglage (84) est un régulateur proportionnel et par intégration.

14. Dispositif selon l'une quelconque des revendications 1 à 13, caractérisé en ce qu'il est possible de régler l'angle que forme le brûleur radiant (81) avec le champ de montage.
